# EUROPÄISCHE PATENTANMELDUNG

(11) **EP 3 031 572 A1**
(43) Veröffentlichungstag der Anmeldung: **15.06.2016**
(21) Anmeldenummer: 15003337.1
(22) Anmeldetag: 21.11.2015
(51) Int. Cl.: B23Q 3/155

(54) **WERKZEUGWECHSELVORRICHTUNG ZUR VERWENDUNG IN EINEM BEARBEITUNGSZENTRUM UND BEARBEITUNGSZENTRUM ZUR MASCHINELLEN BEARBEITUNG EINES WERKSTÜCKS**

(30) Priorität: 11.12.2014 DE 202014009762 U
(71) Anmelder: Hedelius Maschinenfabrik GmbH, 49716 Meppen (DE)
(72) Erfinder: Gerdes, Clemens, 49733 Haren (DE)
(74) Vertreter: Von Rohr Patentanwälte Partnerschaft mbB

(57) **Zusammenfassung**

Gegenstand der Erfindung ist eine Werkzeugwechselvorrichtung zur Verwendung in einem Bearbeitungszentrum (3) zur maschinellen Bearbeitung eines Werkstückes mittels unterschiedlicher Werkzeuge (4, 5), mit einem Werkzeuggreifer (7) mit mindestens einer Werkzeugaufnahme (8) und mit einem Werkzeugmagazin (10) mit einer Mehrzahl von Werkzeugaufnahmen (9), wobei die Werkzeuge (4, 5) und die Werkzeugaufnahmen (8, 9) aneinander angepasst sind, so dass jedes Werkzeug (4, 5) von jeder Werkzeugaufnahme (8, 9) aufnehmbar ist, und wobei mittels des Werkzeuggreifers (7) mindestens ein Werkzeug (4, 5) vom Werkzeugmagazin (10) zu einer Antriebsspindel (11) des Bearbeitungszentrums (3) und zurück transportierbar ist. Diese zeichnet sich dadurch aus, dass mindestens ein zweites Werkzeugmagazin (25) vorgesehen ist, dass das zweite Werkzeugmagazin (25) in Bezug auf das erste Werkzeugmagazin (10) so angeordnet ist, dass Werkzeuge (4, 5) zwischen den Werkzeugaufnahmen (9) der beiden Werkzeugmagazine (10, 25) austauschbar sind, und dass zwischen den beiden Werkzeugmagazinen (10, 25) ein Übergabegreifer (26) vorgesehen ist, mit dem jeweils mindestens ein Werkzeug (4, 5) von einer Werkzeugaufnahme (9) im zweiten Werkzeugmagazin (25) in eine Werkzeugaufnahme (9) im ersten Werkzeugmagazin (10) und umgekehrt transportierbar ist.

## Beschreibung

Die vorliegende Erfindung betrifft eine Werkzeugwechselvorrichtung zur Verwendung in einem Bearbeitungszentrum zur maschinellen Bearbeitung eines Werkstücks mittels unterschiedlicher Werkzeuge gemäß dem Oberbegriff von Anspruch 1. Ferner betrifft die vorliegende Erfindung ein Bearbeitungszentrum zur maschinellen Bearbeitung eines Werkstücks mittels unterschiedlicher Werkzeuge gemäß dem Oberbegriff von Anspruch 8.

Bearbeitungszentren der in der Rede stehenden Art dienen im Maschinen- und Anlagenbau der Bearbeitung komplizierter Werkstücke an bis zu fünf Seiten bzw. einschließlich eines Umspannvorgangs an bis zu sechs Seiten mittels einer dreiachsigen oder fünfachsigen Bearbeitung. Dabei dient sowohl zur dreiachsigen als auch zur fünfachsigen Bearbeitung ein Fahrständer mit mindestens einer Spindel. Der Fahrständer ist zumeist nach Art eines X-Y-Z-Schlittens aufgebaut. Er kann mit diversen zusätzlichen Spindeln komplettiert werden.

Der Fahrständer arbeitet zusammen mit einer Dreh-Schwenktischeinheit, auf der ein Werkstück aufgespannt ist. Somit lässt sich das Werkstück relativ zur Spindel um seine Hochachse komplett drehen und im Regelfall nach beiden Seiten um 90° schwenken. Zusammen mit der dreiachsigen Führung der Spindel ergibt sich die insgesamt fünfachsige Bearbeitungsmöglichkeit für das auf dem Drehtisch der Dreh-Schwenktischeinheit aufgespannte Werkstück.

Ein Bearbeitungszentrum zum maschinellen Bearbeiten eines Werkstückes gibt es auch mit einer umfangreicher verfahrbaren Traganordnung für das Werkstück, so dass dort der die Antriebsspindel tragende Bearbeitungsständer nicht als Fahrständer ausgeführt ist (DE 20 2006 015 098 U1). Die Lehre der Erfindung betrifft also auch Bearbeitungszentren mit einem einfachen Bearbeitungsständer, der nicht als Fahrständer ausgeführt ist.

Typische Bearbeitungen eines Werkstücks in einem Bearbeitungszentrum sind Umformen, Trennen und Fügen von Werkstücken aus Metall. Grundsätzlich kann ein solches Bearbeitungszentrum auch für die Bearbeitung von Werkstücken aus Kunststoff oder Holz ausgelegt werden. Hauptanwendungsgebiet ist aber die spanende Metallbearbeitung wie Bohren oder Fräsen.

Bei der Spindel der Bearbeitungszentren der in der Rede stehenden Art handelt es sich um eine werkzeugtragende Motorspindel, d.h. in die Spindel ist ein Werkzeug eingesetzt, das von der Spindel während der Bearbeitung des Werkstücks rotiert wird. Dazu weist die Spindel eine Werkzeugschnittstelle auf. Die Werkzeugschnittstelle umfasst eine Werkzeugaufnahme zur Aufnahme eines Werkzeugs sowie einen Werkzeugspanner zur lösbaren Fixierung des Werkzeugs an der Spindel. Bei solchen Bearbeitungszentren kann ein Wechsel des in der Spindel befindlichen Werkzeugs erforderlich werden, z. B. weil ein andersartiges Werkzeug zur weiteren Bearbeitung des Werkstücks nötig ist oder weil das eingesetzte Werkzeug defekt oder abgenutzt (z. B. stumpf) ist. Zum Wechseln des Werkzeugs kommt bei den Bearbeitungszentren der in Rede stehenden Art eine automatisierte Werkzeugwechselvorrichtung zum Einsatz.

Eine Werkzeugwechselvorrichtung im Sinne der vorliegenden Erfindung dient zur Entnahme eines Werkzeugs aus der Spindel, zum Transport des Werkzeugs zu einem Werkzeugmagazin, zur Übergabe des Werkzeugs an das Werkzeugmagazin, zur Entgegennahme eines anderen Werkzeugs vom Werkzeugmagazin, zum Transport dieses anderen Werkzeugs vom Werkzeugmagazin zur Spindel und zum Einsetzen dieses anderen Werkzeugs in die Spindel. Das Werkzeugmagazin ist Teil der Werkzeugwechselvorrichtung.

Eine wichtige Kenngröße einer Werkzeugwechselvorrichtung ist die Werkzeugwechselzeit bzw. die Span-zu-Span-Zeit bei automatischem Werkzeugwechsel (nach VDI-Richtlinie 2852 Blatt 1). Hier wird ein möglichst niedriger Wert angestrebt. Die Span-zu-Span-Zeit hat direkten Einfluss auf die Bearbeitungszeit, also die Zeit zur Bearbeitung des Werkstücks, bzw. die Durchlaufzeit.

Eine Werkzeugwechselvorrichtung zur Verwendung an einem verfahrbaren Fahrständer eines Bearbeitungszentrums zur maschinellen Bearbeitung eines Werkstücks mittels unterschiedlicher Werkzeuge zeigt die DE 10 2011 109 288 A1, von der die vorliegende Erfindung ausgeht. Die bekannte Werkzeugwechselvorrichtung weist einen Tragarm auf, der an einem Ende einen Werkzeuggreifer trägt. Dieser hat mindestens eine Werkzeugaufnahme. Im konkreten Fall hat er zwei Werkzeugaufnahmen, ist also als Doppelgreifer ausgeführt. Die Werkzeugaufnahmen des Doppelgreifers weisen in die gleiche Richtung. Mittels des Tragarms ist ein Werkzeug von einem Werkzeugmagazin des Bearbeitungszentrums zu einer an einem Fahrständer des Bearbeitungszentrums angebrachten, verfahrbaren Antriebsspindel und zurück transportierbar.

Bei der bekannten Werkzeugwechselvorrichtung ist der Tragarm um eine Schwenkachse schwenkbar und als ein aus mehreren Einzelgliedern zusammengesetztes Mehrfachgelenk ausgebildet. Der Tragarm ist von einem linearen Antrieb entlang einer durch die Länge der Einzelglieder und die Anlenkpunkte definierten Kurve zwischen einer Werkzeug-Übergabeposition an dem Werkzeugmagazin und einer Werkzeug-Wechselposition schwenkbar.

Der Doppelgreifer ist an einem der Einzelglieder angeordnet, wobei die beiden Werkzeugaufnahmen des Doppelgreifers nebeneinander, in Richtung der längsten Ausdehnung des Einzelglieds versetzt angeordnet sind.

Ein Werkzeugwechsel wird bei der bekannten Werkzeugwechselvorrichtung folgendermaßen durchgeführt. Zunächst schwenkt der Tragarm zu einer Werkzeug-Übergabeposition am Werkzeugmagazin. Ein Magazingreifer des Werkzeugmagazins entnimmt ein ausgewähltes Werkzeug aus dessen Werkzeugaufnahme und befördert es zu der Werkzeug-Übergabeposition, an der es von einer der beiden Werkzeugaufnahmen des Doppelgreifers übernommen wird.

Inzwischen ist die Antriebsspindel zu einer Werkzeug-Wechselposition verfahren worden. Der Tragarm der Werkzeugwechselvorrichtung schwenkt nun von der Werkzeug-Übergabeposition am Werkzeugmagazin zu der Werkzeug-Wechselposition. An der Werkzeug-Wechselposition ergreift die leere bzw. unbesetzte Werkzeugaufnahme des Doppelgreifers das zuvor benutzte Werkzeug, das an der Spindel festgeklemmt bzw. in die Spindel eingespannt ist, und nimmt dieses auf.

Daraufhin fährt die Spindel über die Werkzeugaufnahme, die das aus dem Werkzeugmagazin entnommene Werkzeug hält, wobei dann dieses Werkzeug in die Spindel eingeführt und in die Spindel eingespannt wird.

Der Tragarm der Werkzeugwechselvorrichtung bringt dann in einem umgekehrten Bewegungsablauf das benutzte Werkzeug zu der Werkzeug-Übergabeposition am Werkzeugmagazin zurück.

Bei der bekannten Werkzeugwechselvorrichtung schwenkt der Tragarm ausschließlich in einer Ebene, und zwar in der horizontalen, also X-Y-Ebene. In vertikaler, also Z-Richtung ist der Tragarm nicht bewegbar. Die zum Werkzeugwechsel nötige Bewegung in Z-Richtung wird von der Spindel ausgeführt, die grundsätzlich in Z-Richtung verfahrbar ist. Somit erspart die bekannte Werkzeugwechselvorrichtung einen Antrieb des Tragarms in Z-Richtung.

Bei einer Werkzeugwechselvorrichtung, die in einer älteren, nicht vorveröffentlichten Anmeldung beschrieben wird (DE 20 2013 009 776 U1), wird die Span-zu-Span-Zeit dadurch verkürzt, dass der Tragarm um eine Schwenkachse schwenkbar ist, so dass sich der Doppelgreifer des Tragarms auf einem Schwenkkreis bewegt. Die beiden Werkzeugaufnahmen des Doppelgreifers sind in Umfangsrichtung des Schwenkkreises versetzt angeordnet. Die beiden Werkzeugaufnahmen des Doppelgreifers weisen den gleichen Abstand zum Mittelpunkt des Schwenkkreises auf. Hier sind also die beiden Werkzeugaufnahmen des Doppelgreifers nebeneinander angeordnet, wobei der jeweilige Mittelpunkt der beiden Werkzeugaufnahmen den gleichen Abstand zur Schwenkachse bzw. zum Mittelpunkt des Schwenkkreises aufweist.

Bei der hier angesprochenen Werkzeugwechselvorrichtung muss die Antriebsspindel zum Wechseln der Werkzeuge nicht von der einen zu der anderen Werkzeugaufnahme des Doppelgreifers verfahren werden. Vielmehr schwenkt lediglich der Doppelgreifer von seiner ersten zu seiner zweiten Werkzeug-Wechselposition. Dieses Schwenken benötigt weniger Zeit als ein Verfahren der Antriebsspindel von der ersten zur zweiten Werkzeugaufnahme des Doppelgreifers. Diese Werkzeugwechselvorrichtung führt also zu einer Verkürzung der Span-zu-Span-Zeit und somit einer Verkürzung der Bearbeitungszeit für das jeweilige Werkstück. Außerdem ermöglicht die erfindungsgemäße Werkzeugwechselvorrichtung einen einfachen und robusten Aufbau und folglich einen zuverlässigen Betrieb und eine kostengünstige Herstellung.

Bei der Bearbeitung eines bestimmten Werkstückes muss man zumeist verschiedene Werkzeuge einsetzen. Der Einsatz der verschiedenen Werkzeuge muss regelmäßig in einer bestimmten Reihenfolge erfolgen, um das gewünschte Arbeitsergebnis zu erzielen. Eine Steuereinrichtung der Werkzeugwechselvorrichtung bzw. des Bearbeitungszentrums insgesamt sorgt bei der bekannten Werkzeugwechselvorrichtung dafür, dass die Werkzeugaufnahmen des Werkzeugmagazins nacheinander so zum Werkzeuggreifer positioniert werden, dass dieser zum jeweiligen Zeitpunkt immer gerade das richtige Werkzeug aus dem Werkzeugmagazin entnehmen kann.

Der Lehre der Erfindung liegt das Problem zugrunde, die zuvor erläuterte Werkzeugwechselvorrichtung hinsichtlich der Span-zu-Span-Zeit weiter zu verbessern.

Eine weitere Aufgabe der vorliegenden Erfindung besteht darin, ein Bearbeitungszentrum zur maschinellen Bearbeitung eines Werkstücks mittels unterschiedlicher Werkzeuge bereitzustellen, das eine kurze Span-zu-Span-Zeit ermöglicht.

Die zuvor geschilderte Aufgabenstellung wird durch die erfindungsgemäße Werkzeugwechselvorrichtung gemäß Anspruch 1 bzw. durch das erfindungsgemäße Bearbeitungszentrum gemäß Anspruch 8 gelöst. Ausgestaltungen dieser Erfindungsaspekte sind Gegenstand der jeweiligen Unteransprüche.

Es versteht sich von selbst, dass Ausgestaltungen, Ausführungsformen, Vorteile u. dgl., welche nachfolgend zu Zwecken der Vermeidung von Wiederholungen zu einem Erfindungsaspekt angeführt sind, in Bezug auf den anderen Erfindungsaspekt entsprechend gelten.

Dies vorausgeschickt, wird im Folgenden die vorliegende Erfindung näher beschrieben.

Bei der erfindungsgemäßen Werkzeugwechselvorrichtung ist mindestens ein zweites Werkzeugmagazin vorgesehen. Das Vorsehen eines zweiten Werkzeugmagazins bedeutet natürlich zunächst einmal einen höheren Herstellungsaufwand. Der Vorteil des zweiten Werkzeugmagazins zeigt sich aber in dem Betrieb der Werkzeugwechselvorrichtung.

Wesentlich ist, dass das zweite Werkzeugmagazin in Bezug auf das erste Werkzeugmagazin so angeordnet ist, dass Werkzeuge zwischen den Werkzeugmagazinen austauschbar sind. Zwischen den Werkzeugmagazinen ist dazu ein Übergabegreifer vorgesehen, mit dem jeweils mindestens ein Werkzeug von einer Werkzeugaufnahme im zweiten Werkzeugmagazin in eine Werkzeugaufnahme im ersten Werkzeugmagazin und umgekehrt transportierbar ist.

Das zweite Werkzeugmagazin schafft zunächst grundsätzlich mehr Aufnahmeplätze für weitere Werkzeuge als dies mit nur einem Werkzeugmagazin möglich ist. Das zweite Werkzeugmagazin schafft aber vor allem den "Rangierplatz" für Werkzeuge, der es ermöglicht, bei entsprechender Steuerung der Werkzeugwechselvorrichtung das richtige Werkzeug zum richtigen Zeitpunkt sehr viel schneller am richtigen Platz, nämlich an der Zugriffsstelle des Werkzeuggreifers bereitzustellen.

Nach bevorzugter Lehre der Erfindung ist durch eine außerdem vorhandene programmierbare Steuereinrichtung, die Teil der Werkzeugwechselvorrichtung oder Teil des Bearbeitungszentrums insgesamt sein kann, realisierbar, dass in der Steuereinrichtung eine Einsatzabfolge verschiedener Werkzeuge an der Antriebsspindel des Bearbeitungszentrums vorgebbar ist und dass durch die Steuereinrichtung die Werkzeugmagazine und der Übergabegreifer so steuerbar sind, dass die erforderlichen Werkzeuge aus dem zweiten Werkzeugmagazin abholbar und im ersten Werkzeugmagazin in einer durch die Einsatzabfolge vorgegebenen Reihenfolge in Werkzeugaufnahmen anordenbar sind.

Durch das Zusammenwirken der programmierbaren Steuereinrichtung mit dem Übergabegreifer und den beiden Werkzeugmagazinen können die für eine bestimmte Bearbeitung eines bestimmten Werkstückes erforderlichen verschiedenen Werkzeuge bereits vorweg oder sogar während bereits laufender Bearbeitung des Werkstückes in der für die Einsatzabfolge erforderlichen Reihenfolge im ersten Werkzeugmagazin bereitgestellt werden, so dass sie dort in dieser Reihenfolge vom Werkzeuggreifer eines nach dem anderen übernommen werden können. Das viel Zeit verschlingende Hin- und Herfahren der Werkzeugaufnahmen, die verschiedene Werkzeuge bevorraten, findet erfindungsgemäß im zweiten Werkzeugmagazin statt. Diese Zeit beeinträchtigt aber nicht die Span-zu-Span-Zeit der Werkzeugwechselvorrichtung insgesamt. Diese wird auf das Minimum reduziert, weil im ersten Werkzeugmagazin, das mit dem Werkzeuggreifer kooperiert, die Werkzeuge bereits in der richtigen Reihenfolge vorpositioniert sind.

Für die Ausgestaltung des Werkzeuggreifers empfiehlt sich auch im vorliegenden Fall die Gestaltung als Doppelgreifer, vorzugsweise in der durch die nicht vorveröffentlichte ältere Anmeldung beschriebenen Ausgestaltung. Dazu ist bevorzugt vorgesehen, dass der Werkzeuggreifer als Doppelgreifer ausgeführt ist und dass, vorzugsweise, der Doppelgreifer auf einem Schwenkkreis bewegbar ist, die beiden Werkzeugaufnahmen des Doppelgreifers in Umfangsrichtung des Schwenkkreises versetzt angeordnet sind und die beiden Werkzeugaufnahmen des Doppelgreifers vorzugsweise den gleichen Abstand zum Mittelpunkt des Schwenkkreises aufweisen.

Ein Grundgedanke dieser Konstruktion besteht darin, es zu ermöglichen, allein durch Schwenken des Tragarms die eine Werkzeugaufnahme des Doppelgreifers an diejenige Position zu schwenken, die die andere Werkzeugaufnahme des Doppelgreifers vor diesem Schwenken innehatte.

Ein Werkzeugwechsel wird mittels dieser Werkzeugwechselvorrichtung folgendermaßen durchgeführt. Zunächst wird der Doppelgreifer des Tragarms zu einer ersten Werkzeug-Übergabeposition in der Nähe des Werkzeugmagazins geschwenkt. Dort nimmt eine der Werkzeugaufnahmen des Doppelgreifers ein Werkzeug auf, das zuvor aus dem Werkzeugmagazin entnommen wurde.

Anschließend wird der Doppelgreifer zu einer ersten Werkzeug-Wechselposition geschwenkt, in deren Nähe sich zu diesem Zeitpunkt auch die Antriebsspindel befindet. Dann wird die Antriebsspindel derart verfahren, dass ein noch in der Antriebssppindel befindliches Werkzeug in die andere, noch leere Werkzeugaufnahme des Doppelgreifers eingesetzt wird.

Danach wird der Doppelgreifer zu einer zweiten Werkzeug-Wechselposition in der Nähe der Antriebsspindel geschwenkt, und zwar so weit, dass sich die eine Werkzeugaufnahme des Doppelgreifers (mit dem aus dem Werkzeugmagazin entnommenen Werkzeug) nach dem Schwenken an derjenigen Position befindet, die die andere Werkzeugaufnahme des Doppelgreifers (mit dem aus der Antriebsspindel stammenden Werkzeug) vor dem Schwenken innehatte. Dabei sind die beiden Werkzeug-Wechselpositionen des Doppelgreifers benachbart bzw. dicht beieinander verortet.

Anschließend wird das neue Werkzeug in die Antriebsspindel eingesetzt. Dazu kann die Antriebsspindel und/oder die Werkzeugwechselvorrichtung verfahren werden. Vorzugsweise wird die Antriebsspindel verfahren, insbesondere in Z-Richtung.

Schließlich wird der Doppelgreifer zu einer zweiten Werkzeug-Übergabeposition in der Nähe des Werkzeugmagazins geschwenkt. Dort wird dann das aus der Antriebsspindel stammende Werkzeug aus der anderen Werkzeugaufnahme des Doppelgreifers entnommen und in das Werkzeugmagazin eingesetzt.

Vorzugsweise ist der Tragarm an einem dem Doppelgreifer gegenüberliegenden Ende schwenkbar gelagert. In diesem Fall verläuft die Schwenkachse durch das dem Doppelgreifer gegenüberliegende Ende. Bevorzugt ist der Tragarm von einem Motor über eine Welle antreibbar. Besonders bevorzugt verläuft die Schwenkachse der Werkzeugwechselvorrichtung in Z-Richtung durch das dem Doppelgreifer gegenüberliegende Ende und die Welle. Die Schwenkachse kann aber auch von der Welle beabstandet und durch eine Kulissenführung ersetzt sein und insofern eine "virtuelle" Schwenkachse bilden.

Vorzugsweise sind die beiden Werkzeugaufnahmen des Doppelgreifers als elastische Klauen ausgeführt. Die elastischen Klauen sind so ausgebildet, dass Werkzeuge mit Steil- oder Hohlschaftkegel, insbesondere gemäß DIN 69871 bzw. DIN 69893, eingesetzt werden können.

Um das Zusammenwirken der beiden Werkzeugmagazine zu optimieren empfiehlt es sich, dass die Werkzeugmagazine zumindest dort, wo der Übergabegreifer angeordnet ist, zueinander benachbart angeordnet sind.

Zwischen dem Übergabegreifer, der zwischen den beiden Werkzeugmagazinen die Werkzeuge hin und her transportiert, einerseits und dem Werkzeuggreifer andererseits sollte am ersten Werkzeugmagazin ein gewisser Abstand vorliegen, damit eine gewisse Anzahl von verschiedenen Werkzeugen in Werkzeugaufnahmen des ersten Werkzeugmagazins auf der Strecke zwischen Übergabegreifer und Werkzeuggreifer Platz haben. Um das zu realisieren empfiehlt es sich, dass zumindest das erste Werkzeugmagazin eine bestimmte Längserstreckung aufweist und dass der Werkzeuggreifer an oder nahe zu einem Ende des Werkzeugmagazins und der Übergabegreifer an oder nahe zu einem gegenüberliegenden Ende des Werkzeugmagazins angeordnet ist.

Häufig ist ein Werkzeugmagazin kreisringförmig gestaltet. Es kann aber auch als Kettenmagazin ausgeführt sein, wobei eine Kette auf einer Kurve entlang des Außenumfangs eines Karussells verläuft. Das Werkzeugmagazin hat jedenfalls eine Mehrzahl von auf dem Außenumfang einer Basis angeordneten einheitlichen Werkzeugaufnahmen für verschiedene einzelne Werkzeuge, die jedoch einheitliche, zu den Werkzeugaufnahmen passende Aufnahmehalterungen aufweisen.

Dieselben Ausgestaltungsformen gelten für das erste und das zweite Werkzeugmagazin. Nach besonders bevorzugter Lehre ist vorgesehen, dass sowohl das erste Werkzeugmagazin als auch das zweite Werkzeugmagazin als Kettenmagazin mit einem Karussell und einer daran umlaufenden Kette mit daran angeordneten Werkzeugaufnahmen ausgeführt sind.

Die Werkzeugmagazine können stationär ausgeführt sein. Besonders bevorzugt ist es allerdings, dass die Werkzeugwechselvorrichtung zum Transport mindestens eines Werkzeugs von und zu mit einem Fahrständer mitfahrenden Werkzeugmagazinen ausgebildet ist.

Ein mitfahrendes Werkzeugmagazin ist sowohl vom Platz als auch vom Gewicht her begrenzt. Es hat meist nur eine geringe Anzahl von Werkzeugaufnahmen, häufig nicht mehr als 30 bis 40 Stück. Normalerweise ist das mitfahrende Werkzeugmagazin am Fahrständer von der Rückseite des Bearbeitungszentrums aus bestückbar.

Vorzugsweise ist die Werkzeugwechselvorrichtung am Fahrständer anbringbar. Dieses Merkmal ermöglicht insbesondere bei einem mitfahrenden Werkzeugmagazin sehr kurze Wege zum Wechseln eines Werkzeugs, also zwischen dem mitfahrenden Werkzeugmagazin und der Antriebsspindel.

Es hat sich als vorteilhaft erwiesen, wenn der Werkzeuggreifer derart ausgebildet ist, dass bei einem Werkzeugwechsel der Transportweg des transportierten Werkzeugs ausschließlich in der Ebene des Schwenkkreises oder einer dazu parallelen Ebene verläuft. Dadurch ist bei dem Werkzeuggreifer keine Verfahrvorrichtung erforderlich, die den Werkzeuggreifer in eine die Ebene des Schwenkkreises schneidende Richtung, insbesondere senkrecht zur Ebene des Schwenkkreises, verfährt. Dies spart Kosten und reduziert die Zeit zum Transport des Werkzeugs.

Der Transportweg des vom Werkzeuggreifer transportierten Werkzeugs beschreibt dabei vorzugsweise ausschließlich einen Kreisbogen. In diesem Fall ist die Schwenkachse stationär, verändert also ihre Position nicht. Der Begriff "Transportweg", wie er im Rahmen der vorliegenden Erfindung verwendet wird, kennzeichnet den Weg, den ein beliebiger Punkt eines Werkzeugs während des Transports mit dem Werkzeuggreifer zurücklegt.

Ein weiterer Gegenstand der vorliegenden Erfindung ist ein Bearbeitungszentrum zur maschinellen Bearbeitung eines Werkstücks mittels unterschiedlicher Werkzeuge.

Das erfindungsgemäße Bearbeitungszentrum weist eine erfindungsgemäße Werkzeugwechselvorrichtung auf.

Daher ermöglicht das erfindungsgemäße Bearbeitungszentrum eine niedrige Span-zu-Span-Zeit. Außerdem zeichnet sich das erfindungsgemäße Bearbeitungszentrum durch eine hohe Zuverlässigkeit bei geringen Herstellungskosten aus.

Vorzugsweise sind die Werkzeugmagazine des Bearbeitungszentrums am Fahrständer angebracht und mit dem Fahrständer jedenfalls in X-Richtung mitfahrend ausgeführt.

Es ist bevorzugt, wenn das Werkzeugmagazin einen ersten Träger aufweist, der das Werkzeugmagazin trägt und am Fahrständer angebracht ist.

Vorzugsweise weist das erste Werkzeugmagazin einen Magazingreifer auf. Der Magazingreifer ist zur Entnahme eines Werkzeugs aus einer Werkzeugaufnahme des ersten Werkzeugmagazins und zum Transport eines Werkzeugs zur Werkzeug-Übergabeposition ausgebildet. Der Magazingreifer ist ferner zum Transport eines Werkzeugs von der Werkzeug-Übergabeposition zu einer Werkzeugaufnahme des ersten Werkzeugmagazins und zum Einsetzen eines Werkzeugs in eine Werkzeugaufnahme des Werkzeugmagazins ausgebildet.

Bei dieser Ausgestaltung entnimmt bzw. übergibt der Werkzeuggreifer ein Werkzeug nicht direkt aus bzw. an das erste Werkzeugmagazin. Vielmehr entnimmt der Magazingreifer ein Werkzeug aus einer Werkzeugaufnahme des Werkzeugmagazins und transportiert es zur Werkzeug-Übergabeposition, wo es der Werkzeuggreifer dann übernimmt. Umgekehrt übernimmt der Magazingreifer ein Werkzeug aus einer der Werkzeugaufnahmen des Werkzeuggreifers, transportiert es zum Werkzeugmagazin und setzt es in eine der Werkzeugaufnahmen des Werkzeugmagazins ein.

Vorzugsweise ist der Magazingreifer an einem Träger des Werkzeugmagazins angebracht. Diese Ausgestaltung ermöglicht eine kompakte Anordnung.

Es ist bevorzugt wenn das Werkzeugmagazin einen Pneumatikzylinder aufweist, mittels dessen der Magazingreifer linear verfahrbar ist. Dies stellt eine kostengünstige, robuste und zuverlässige Ausgestaltung dar.

Vorzugsweise ist der Magazingreifer bei einem Werkzeugwechsel in einer zur Ebene des Schwenkkreises parallelen Ebene verfahrbar. Dies erspart eine Verfahrvorrichtung, die den Magazingreifer in eine die Ebene des Schwenkkreises schneidende Richtung, insbesondere senkrecht zur Ebene des Schwenkkreises, verfährt. Dies führt zu günstigen Herstellungskosten, ohne die Funktionalität zu verschlechtern.

Die Begriffe "X-Richtung", "Y-Richtung", "Z-Richtung", "X-Y-Ebene" usw. werden im Rahmen der vorliegenden Erfindung so verwendet, wie sie üblicherweise in einem kartesischen Koordinatensystem verwendet werden. Wenn der Fahrständer des Bearbeitungszentrums nach Art eines X-Y-Z-Schlittens aufgebaut ist, können auch dessen X-Schlitten, Y-Schlitten und Z-Schlitten zur Orientierung herangezogen werden.

Die Erfindung wird nachfolgend anhand der Erläuterung eines bevorzugten Ausführungsbeispiels mit Bezugnahme auf die Zeichnung näher erläutert. Die oben beschriebenen und/oder in den Ansprüchen und/oder in der folgenden Figurenbeschreibung offenbarten Merkmale können bedarfsweise miteinander kombiniert werden, auch wenn dies nicht im Einzelnen ausdrücklich beschrieben ist.

In der Zeichnung zeigt:
- Fig. 1: schematisch in einer perspektivischen Ansicht ein Bearbeitungszentrums mit einer Werkzeugwechselvorrichtung im Zustand zu Beginn eines Werkzeugwechsels,
- Fig. 2: schematisch in einer perspektivischen Ansicht schräg von vorn, eine bevorzugte Ausführungsform eines erfindungsgemäßen Bearbeitungszentrums im gleichen Zustand wie in der Darstellung von Fig. 1,
- Fig. 3: in einer perspektivischen Ansicht schräg von hinten und oben das erfindungsgemäße Bearbeitungszentrum bei Beginn der Übernahme eines Werkzeugs vom zweiten in das erste Werkzeugmagazin und
- Fig. 4: in einer Fig. 3 entsprechenden Darstellung das erfindungsgemäße Bearbeitungszentrum nach Abschluss der Übergabe des Werkzeugs vom zweiten in das erste Werkzeugmagazin.

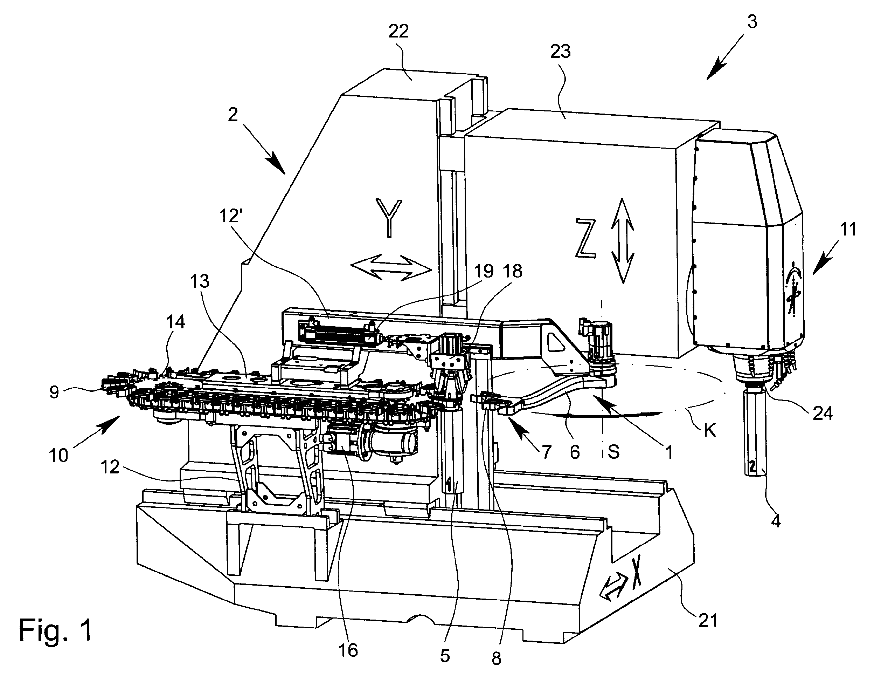

Die Fig. 1 zeigt schematisch in einer perspektivischen Ansicht eine Werkzeugwechselvorrichtung 1 an einem verfahrbaren Fahrständer 2 eines Bearbeitungszentrums 3 zur maschinellen Bearbeitung eines nicht dargestellten Werkstücks, insbesondere zur spanabhebenden Metallbearbeitung wie Fräsen und/oder Bohren, mittels unterschiedlicher Werkzeuge 4, 5.

Die in Fig. 1 dargestellten Bauteile befinden sich in einem von mehreren Arbeitsräumen des Bearbeitungszentrums 3 innerhalb einer Schutzverkleidung.

Das dargestellte Ausführungsbeispiel zeigt den Fahrständer 2 des Bearbeitungszentrums 3. Grundsätzlich ist auch ein normaler, nicht verfahrbarer Bearbeitungsständer 2 vorstellbar, wenn sich das Werkstück, das zu bearbeiten ist, entsprechend flexibler bewegen lässt. Die Lehre der Erfindung ist also nicht auf einen Bearbeitungsständer in Form eines Fahrständers 2 beschränkt.

Die Werkzeugwechselvorrichtung 1 weist einen Tragarm 6 auf. Der Tragarm 6 weist an einem Ende einen Werkzeuggreifer 7 auf, der hier als Doppelgreifer 7 mit zwei Werkzeugaufnahmen 8 ausgebildet ist.

Mittels des Tragarms 6 ist ein Werkzeug 5 (bzw. zwei Werkzeuge 4, 5) von einem ersten Werkzeugmagazin 10 bzw. von einer ersten Werkzeug-Übergabeposition des Doppelgreifers 7 zu einer am Fahrständer 2 des Bearbeitungszentrums 3 angebrachten, verfahrbaren, werkzeugtragenden Antriebsspindel 11 bzw. zu einer ersten Werkzeug-Wechselposition des Doppelgreifers 7 transportierbar. Die erste Werkzeug-Übergabeposition des Doppelgreifers 7 lässt sich in Fig. 1 lokalisieren, nämlich an der Stelle, an der sich der Doppelgreifer 7 der Werkzeugwechselvorrichtung 1 in Fig. 1 befindet.

Die Einzelheiten der Funktion des hier als Doppelgreifer 7 ausgeführten Werkzeuggreifers lassen sich dem nicht vorveröffentlichten Dokument DE 20 2013 009 776 U1 entnehmen, dessen Inhalt hier in vollem Umfange mit in den Offenbarungsgehalt einbezogen wird.

Der Tragarm 6 ist um eine Schwenkachse S schwenkbar, so dass sich der Doppelgreifer 7 auf einem Schwenkkreis K bzw. einem Kreisbogen des Schwenkkreises K bewegt. Die beiden Werkzeugaufnahmen 8 des Doppelgreifers 7 sind in Umfangsrichtung des Schwenkkreises K versetzt angeordnet. Der Versatz beträgt vorzugsweise wenige Zentimeter. Die beiden Werkzeugaufnahmen 8 des Doppelgreifers 7 weisen vorzugsweise den gleichen Abstand zum Mittelpunkt des Schwenkkreises K auf.

Bei der dargestellten Ausführungsform ist der Tragarm 6 an einem dem Doppelgreifer 7 gegenüberliegenden Ende schwenkbar gelagert. Der Tragarm 7 ist von einem Motor über eine Welle antreibbar. Die Schwenkachse S verläuft durch diese Welle.

Die beiden Werkzeugaufnahmen 8 des Doppelgreifers 7 sind als elastische Klauen ausgeführt. Dies ermöglicht die Aufnahme verschiedenartiger Werkzeuge.

Bei der dargestellten Ausführungsform ist das erste Werkzeugmagazin 10 am Fahrständer 2 angebracht und mit dem Fahrständer 2 mitfahrend ausgeführt. Dies ermöglicht kurze Wege beim Transport eines Werkzeugs 4, 5 vom Werkzeugmagazin 10 zur Antriebsspindel 11 und zurück während eines Werkzeugwechsels.

Bei der dargestellten und bevorzugten Ausführungsform weist das erste Werkzeugmagazin 10 einen ersten Träger 12 auf, der das erste Werkzeugmagazin 10 trägt und am Fahrständer 2 angebracht ist. Außerdem weist das erste Werkzeugmagazin 10 hier einen zweiten Träger 12' auf. Die längste Ausdehnung des zweiten Trägers 12' verläuft in einer zur Ebene des Schwenkkreises K parallelen Ebene und auf einer Höhe oberhalb der Ebene des Schwenkkreises K.

Der Werkzeuggreifer 7 ist hier ebenfalls am Fahrständer 2 angebracht, und zwar am zweiten Träger 12' des ersten Werkzeugmagazins 10.

Bei der dargestellten und bevorzugten Ausführungsform ist das erste Werkzeugmagazin 10 als Kettenmagazin ausgeführt. Das erste Werkzeugmagazin 10 weist dabei ein Karussell 13 auf, das am ersten Träger 12 angebracht ist. An dem Karussell 13 ist der zweite Träger 12' des ersten Werkzeugmagazins 10 angebracht. Entlang des Außenumfangs des Karussells 13 verläuft eine Kette 14 auf einer elliptischen Kurve. An der Kette 14 sind vom Karussell 13 wegweisende Werkzeugaufnahmen 9 angeordnet.

Die Kette 14 des ersten Werkzeugmagazins 10 wird mittels einer Motor-Getriebekombination 16 angetrieben. Die Kette 14 des ersten Werkzeugmagazins 10 kann angetrieben von der Motor-Getriebekombination 16 die Werkzeugaufnahmen 9 des ersten Werkzeugmagazins 10 um das Karussell 13 herum transportieren bzw. verschieben, und zwar in der Ebene des Schwenkkreises K oder einer dazu parallelen Ebene. Mittels der Kette 14 kann ein Werkzeug 5 zu einer Werkzeug-Übergabeposition des ersten Werkzeugmagazins 10 transportiert werden. In Fig. 1 befindet sich das Werkzeug 5 in der Werkzeug-Übergabeposition des Werkzeugmagazins 10.

Die Werkzeugaufnahmen 9 des ersten Werkzeugmagazins 10 sind einheitlich für verschiedene einzelne Werkzeuge 4, 5 ausgebildet. Die Form der Werkzeugaufnahmen 9 des ersten Werkzeugmagazins 10 entspricht der Form der Werkzeugaufnahmen 8 des Doppelgreifers 7. Die Werkzeugaufnahmen 9 des ersten Werkzeugmagazins 10 sind jedoch anders angeordnet als die Werkzeugaufnahmen 8 des Doppelgreifers 7.

Die Werkzeuge 4, 5 weisen einheitliche, zu den Werkzeugaufnahmen 8, 9 passende Aufnahmehalterungen 17 auf. Die Aufnahmehalterungen 17 dienen als Adapter zwischen einem Werkzeug 4, 5 und einer Werkzeugaufnahme 8, 9.

Bei der in Fig. 1 dargestellten Ausführungsform hält der Übersichtlichkeit wegen nur eine Werkzeugaufnahme 9 des ersten Werkzeugmagazins 10 ein Werkzeug 5. Üblicherweise halten mehrere Werkzeugaufnahmen 9 ein Werkzeug 5.

Bei der dargestellten und bevorzugten Ausführungsform weist das erste Werkzeugmagazin 10 einen Magazingreifer 18 auf. Der Magazingreifer 18 ist zur Entnahme eines Werkzeugs 5 aus einer Werkzeugaufnahme 9 des ersten Werkzeugmagazins 10 an der Werkzeug-Übergabeposition des ersten Werkzeugmagazins 10 und zum Transport des Werkzeugs 5 zur ersten Werkzeug-Übergabeposition des Doppelgreifers 7 ausgebildet.

Der Magazingreifer 18 ist ferner zum Transport eines Werkzeugs 4 von der zweiten Werkzeug-Übergabeposition des Doppelgreifers 7 zu einer Werkzeugaufnahme 9 des ersten Werkzeugmagazins 10 bzw. zur Werkzeug-Übergabeposition des ersten Werkzeugmagazins 10 und zum Einsetzen des Werkzeugs 4 in die Werkzeugaufnahme 9 des ersten Werkzeugmagazins 10 ausgebildet.

Der Magazingreifer 18 ist bei der dargestellten und bevorzugten Ausführungsform am zweiten Träger 12' des ersten Werkzeugmagazins 10 angebracht. Hier ist der Magazingreifer 18 auf einer Höhe oberhalb der Kette 14 des ersten Werkzeugmagazins 10 und auf einer Höhe oberhalb des Doppelgreifers 7 der Werkzeugwechselvorrichtung 1 angeordnet.

Das erste Werkzeugmagazin 10 weist bei der dargestellten und bevorzugten Ausführungsform einen Pneumatikzylinder 19 auf, mittels dessen der Magazingreifer 18 linear verfahrbar ist. Der Fahrweg des Magazingreifers 18 ist dabei so festgelegt, dass der Magazingreifer 18 bei einem Werkzeugwechsel in einer zur Ebene des Schwenkkreises K parallelen Ebene verfährt. Bei der dargestellten und bevorzugten Ausführungsform verfährt der Magazingreifer 18 entlang der längsten Ausdehnung des zweiten Trägers 12' des Werkzeugmagazins 10.

Der Magazingreifer 18 weist bei der dargestellten und bevorzugten Ausführungsform zwei Greifarme 20 auf. Diese sind an gegenüberliegenden Seiten des Magazingreifers 18 so angeordnet und so ausgebildet, dass sie ein Werkzeug 4, 5, bevorzugt an einer Aufnahmehalterung 17 des Werkzeugs 4, 5, zangenartig greifen und halten können.

Der Magazingreifer 18 ist so verfahrbar, dass er sich an der Werkzeug-Übergabeposition des ersten Werkzeugmagazins 10 oberhalb der Kette 14 des ersten Werkzeugmagazins 10 befindet. Die Greifarme 20 des Magazingreifers 18 sind dabei so angeordnet, dass bei Verschiebung der Kette 14 das erste Werkzeugmagazin 10 das Werkzeug 5 zwischen die beiden Greifarme 20 des Magazingreifers 18 geschoben werden kann. Bei der in Fig. 1 dargestellten Ausführungsform sind die beiden Greifarme 20 des Magazingreifers 18 dazu auf einer zum zweiten Träger 12' des ersten Werkzeugmagazins 10 parallelen Geraden angeordnet.

Die beiden Greifarme 20 des Magazingreifers 18 sind dabei ferner so angeordnet, dass das Werkzeug 5 aus dem Bereich zwischen den beiden Greifarmen 20 des Magazingreifers 18 mittels des Doppelgreifers 7 herausgeschwenkt werden kann, nachdem der Magazingreifer 18 das Werkzeug 5 freigegeben bzw. losgelassen hat.

Der Magazingreifer 18 und insbesondere seine Greifarme 20 verfahren also ausschließlich auf einer Geraden. Diese Gerade verläuft parallel zur längsten Ausdehnung des zweiten Trägers 12' des ersten Werkzeugmagazins 10. Die Greifarme 20 werden also insbesondere nicht gedreht.

Bei der dargestellten und bevorzugten Ausführungsform weist der Fahrständer 2 drei Schlitten 21, 22, 23 auf, nämlich einen X-Schlitten 21, der in X-Richtung verfahrbar ist, einen Y-Schlitten 22, der in Y-Richtung verfahrbar ist, sowie einen Z-Schlitten 23, der in Z-Richtung verfahrbar ist. Die Schlitten 21, 22, 23 werden dabei jeweils mittels eines Kugelrollspindel-Antriebs und eines Servomotors verfahren.

In Fig. 1 sieht man rechts die Antriebsspindel 11 und an deren unteren Ende eine Werkzeugaufnahme 24 mit dem dort eingesetzten Werkzeug 4.

Bei der dargestellten und bevorzugten Ausführungsform ist der erste Träger 12 des ersten Werkzeugmagazins 10 am X-Schlitten 21 des Fahrständers 2 angebracht.

Der erste Träger 12 des ersten Werkzeugmagazins 10 kann im Grundsatz auch am Y-Schlitten 22 des Fahrständers 2 angebracht sein. In diesem Fall ist eine Verfahrvorrichtung erforderlich, die eine Relativbewegung in Y-Richtung zwischen dem ersten Träger 12 und der Antriebsspindel 11 ermöglicht. Die Konstruktion ist also aufwendiger.

Die dargestellte Ausführungsform stellt nur eine Variante eines Bearbeitungszentrums 3 dar. Nicht dargestellt sind insbesondere Varianten mit mehreren Antriebsspindeln 11, mit horizontal (also in Y-Richtung bzw. X-Richtung) ausgerichteten Antriebsspindeln 11, mit mehreren Fahrständern 2, mit mehreren ersten Werkzeugmagazinen 10, mit einer "virtuellen" Schwenkachse S und mit unterschiedlich ausgebildeten Werkzeugaufnahmen 8, 9, 24.

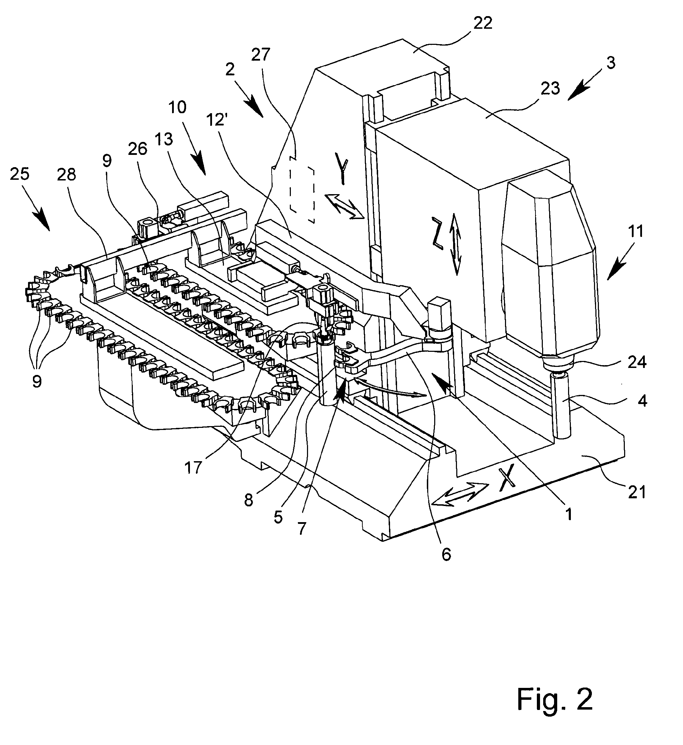

Fig. 2 bis 4 zeigen nun in verschiedenen Positionen eine Werkzeugwechselvorrichtung 1 gemäß der Erfindung. Diese Werkzeugwechselvorrichtung hat mindestens ein zweites Werkzeugmagazin 25. Dieses zweite Werkzeugmagazin 25 sieht man in Fig. 2 links neben dem ersten Werkzeugmagazin 10.

Das erste Werkzeugmagazin 10 hat hier etwa 40 Werkzeugaufnahmen 9. Das zweite Werkzeugmagazin 25 hat hier etwa 50 Werkzeugaufnahmen 9. Wie Fig. 2 zeigt ist das zweite Werkzeugmagazin 25 in Bezug auf das erste Werkzeugmagazin 10 so angeordnet, dass Werkzeuge 4, 5 zwischen den Werkzeugmagazinen 10, 25 austauschbar sind. Um das zu ermöglichen, ist zwischen den Werkzeugmagazinen 10, 25 ein Übergabegreifer 26 vorgesehen, mit dem jeweils mindestens ein Werkzeug 4, 5, im dargestellten und bevorzugten Ausführungsbeispiel genau ein Werkzeug 5, von einer Werkzeugaufnahme 9 im zweiten Werkzeugmagazin 25 in eine Werkzeugaufnahme 9 im ersten Werkzeugmagazin 10 und umgekehrt transportierbar ist.

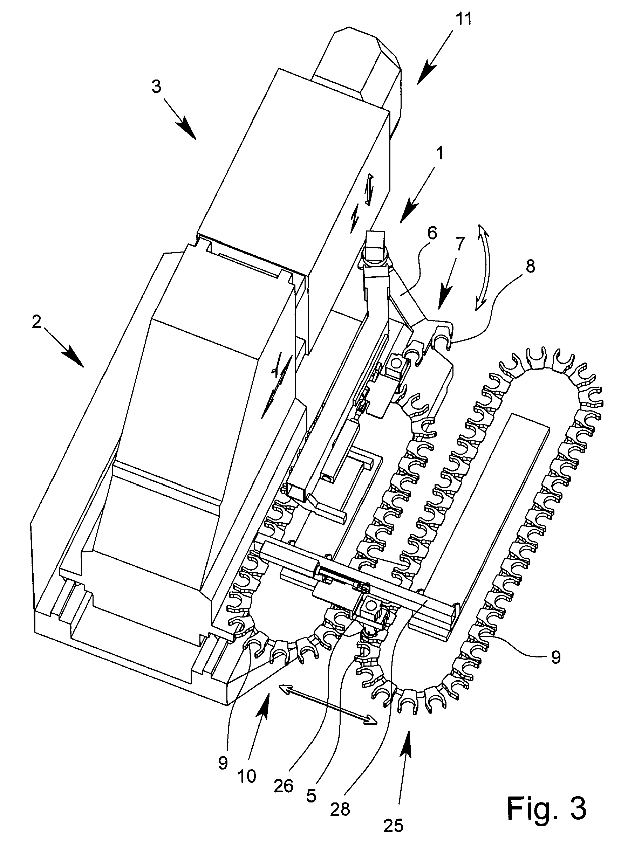

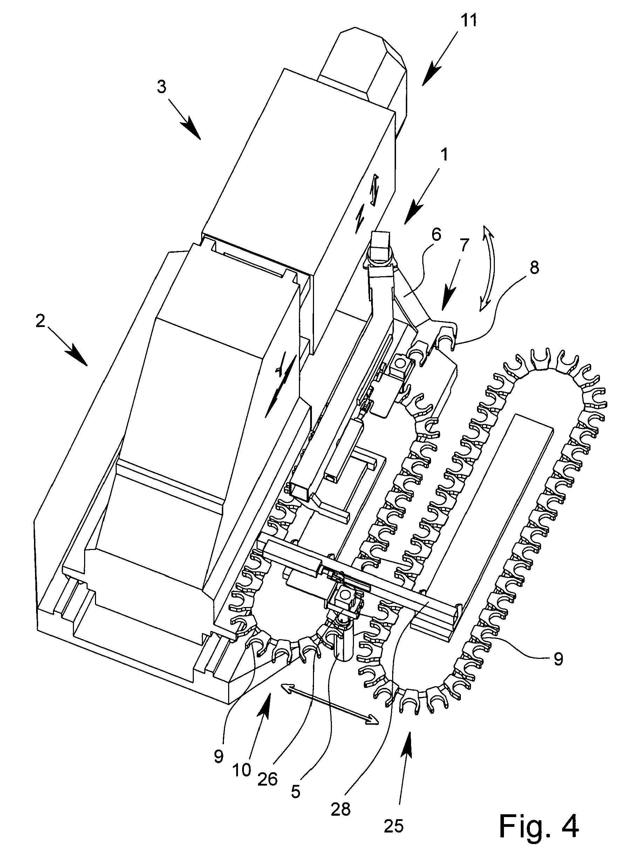

In Fig. 3 sieht man rechts ein Werkzeug 5 unterhalb des Übergabegreifers 26. In Fig. 4 ist dieses Werkzeug von rechts nach links in die gegenüberstehende Werkzeugaufnahme 9 des ersten Werkzeugmagazins 10 transportiert worden. Durch Bewegen der Kette 14 des ersten Werkzeugmagazins 10 kann dieses Werkzeug 5 nun also in Richtung der Übergabeposition zum Werkzeuggreifer 7 bzw. hier zum Magazingreifer 18, bewegt werden.

Der besondere Zweck eines zweiten Werkzeugmagazins 25 erschließt sich dadurch, dass in einer programmierbaren Steuereinrichtung 27, die in den Figuren nur schematisch angedeutet ist, eine Einsatzabfolge verschiedener Werkzeuge 4, 5 an der Antriebsspindel 11 des Bearbeitungszentrums 3 vorgebbar ist und dass durch die Steuereinrichtung 27 die Werkzeugmagazine 10, 25 und der Übergabegreifer 26 so steuerbar sind, dass die erforderlichen Werkzeuge 4, 5 aus dem zweiten Werkzeugmagazin 25 abholbar und im ersten Werkzeugmagazin 10 in einer durch die Einsatzabfolge vorgegebenen Reihenfolge in Werkzeugaufnahmen 9 anordenbar sind. Das erste Werkzeugmagazin 10 hat dann letztlich also die Werkzeuge 5 nicht irgendwie ungeordnet, sondern bereits in einer Reihenfolge, die der gewünschten Einsatzabfolge von Werkzeugen 5 für die nächste Bearbeitungsrunde entspricht.

In Fig. 2 bis 4 sieht man auch am dargestellten Bearbeitungszentrum 3 gemäß der Erfindung die Ausgestaltung des Werkzeuggreifers als Doppelgreifer 7, so dass alle Erläuterungen zur DE 20 2013 009 776 U1 insoweit ohne Weiteres gelten und hier anwendbar sind.

Im dargestellten und bevorzugten Ausführungsbeispiel sind die beiden Werkzeugmagazine 10, 25 als langgestreckte Kettenmagazine ausgeführt. Diese sind im Wesentlichen parallel zueinander angeordnet. Zumindest sollte aber gelten, dass die Werkzeugmagazine 10, 25 zumindest dort, wo der Übergabegreifer 26 angeordnet ist, zueinander benachbart angeordnet sind.

Im dargestellten und bevorzugten Ausführungsbeispiel kann man ferner erkennen, dass zumindest das erste Werkzeugmagazin 10 eine bestimmte Längserstreckung aufweist und dass der Werkzeuggreifer 7 an oder nahe zu einem Ende des ersten Werkzeugmagazins 10 und der Übergabegreifer 26 an oder nahe zu einem gegenüberliegenden Ende des ersten Werkzeugmagazins 10 angeordnet ist. Im Ausführungsbeispiel ist dabei der Übergabegreifer 26 an einem Portalträger 28 verfahrbar angebracht. Der Portalträger 28 verbindet gleichzeitig die Karussells 13 der beiden Werkzeugmagazine 10, 25 miteinander.

Im dargestellten und bevorzugten Ausführungsbeispiel ist ferner ohne Weiteres erkennbar, dass beide Werkzeugmagazine 10, 25 hier als mit dem Bearbeitungsständer, der hier als Fahrständer 2 ausgeführt ist, mitfahrende Magazine ausgeführt sind.

Die verschiedenen Greifer 7, 18, 26 sind vorzugsweise pneumatisch angetrieben. Grundsätzlich können sie aber auch hydraulisch, elektromagnetisch, elektromotorisch oder in kombinativer Weise angetrieben werden.

Das erfindungsgemäße Bearbeitungszentrum 3 bzw. die in dem erfindungsgemäßen Bearbeitungszentrum 3 eingesetzte Werkzeugwechselvorrichtung 1 mit 2 Werkzeugmagazinen 10, 25 schafft die Voraussetzungen für eine weitere Reduktion der Span-zu-Span-Zeit des Bearbeitungszentrums, weil die Werkzeuge 5 im ersten Werkzeugmagazin 10 bereits in der richtigen Reihenfolge bereitgestellt werden können.

### Bezugszeichenliste:

- 1: Werkzeugwechselvorrichtung
- 2: Fahrständer / Bearbeitungsständer
- 3: Bearbeitungszentrum
- 4: Werkzeug
- 5: Werkzeug
- 6: Tragarm der Werkzeugwechselvorrichtung
- 7: Werkzeuggreifer / Doppelgreifer der Werkzeugwechselvorrichtung
- 8: Werkzeugaufnahme des Werkzeuggreifers
- 9: Werkzeugaufnahme des Werkzeugmagazins
- 10: erstes Werkzeugmagazin
- 11: Antriebsspindel
- 12: erster Träger des Werkzeugmagazins
- 12': zweiter Träger des Werkzeugmagazins
- 13: Karussell des Werkzeugmagazins
- 14: Kette des Werkzeugmagazins
- 16: Motor-Getriebekombination des Werkzeugmagazins
- 17: Aufnahmehalterung eines Werkzeugs
- 18: Magazingreifer
- 19: Pneumatikzylinder des Magazingreifers
- 20: Greifarm des Magazingreifers
- 21: X-Schlitten des Fahrständers
- 22: Y-Schlitten des Fahrständers
- 23: Z-Schlitten des Fahrständers
- 24: Werkzeugaufnahme
- 25: zweites Werkzeugmagazin
- 26: Übergabegreifer
- 27: Steuereinrichtung
- 28: Portalträger

## Patentansprüche

1. Werkzeugwechselvorrichtung zur Verwendung in einem Bearbeitungszentrum (3) zur maschinellen Bearbeitung eines Werkstückes mittels unterschiedlicher Werkzeuge (4, 5),
mit einem Werkzeuggreifer (7) mit mindestens einer Werkzeugaufnahme (8) und mit einem Werkzeugmagazin (10) mit einer Mehrzahl von Werkzeugaufnahmen (9), wobei die Werkzeuge (4, 5) und die Werkzeugaufnahmen (8, 9) aneinander angepasst sind, so dass jedes Werkzeug (4, 5) von jeder Werkzeugaufnahme (8, 9) aufnehmbar ist, und
wobei mittels des Werkzeuggreifers (7) mindestens ein Werkzeug (4, 5) vom Werkzeugmagazin (10) zu einer Antriebsspindel (11) des Bearbeitungszentrums (3) und zurück transportierbar ist,
**dadurch gekennzeichnet,**
**dass** mindestens ein zweites Werkzeugmagazin (25) vorgesehen ist,
**dass** das zweite Werkzeugmagazin (25) in Bezug auf das erste Werkzeugmagazin (10) so angeordnet ist, dass Werkzeuge (4, 5) zwischen den Werkzeugaufnahmen (9) der beiden Werkzeugmagazine (10, 25) austauschbar sind, und
**dass** zwischen den beiden Werkzeugmagazinen (10, 25) ein Übergabegreifer (26) vorgesehen ist, mit dem jeweils mindestens ein Werkzeug (4, 5) von einer Werkzeugaufnahme (9) im zweiten Werkzeugmagazin (25) in eine Werkzeugaufnahme (9) im ersten Werkzeugmagazin (10) und umgekehrt transportierbar ist.

2. Werkzeugwechselvorrichtung nach Anspruch 1, in Kombination mit einer programmierbaren Steuereinrichtung (27), **dadurch gekennzeichnet,**
**dass** in der Steuereinrichtung (27) eine Einsatzabfolge verschiedener Werkzeuge (4, 5) an der Antriebsspindel (11) des Bearbeitungszentrums (3) vorgebbar ist und dass durch die Steuereinrichtung (27) die Werkzeugmagazine (10, 25) und der Übergabegreifer (26) so steuerbar sind, dass die erforderlichen Werkzeuge (4, 5) aus dem zweiten Werkzeugmagazin (25) abholbar und im ersten Werkzeugmagazin (10) in einer durch die Einsatzabfolge vorgegebenen Reihenfolge in Werkzeugaufnahmen (9) anordenbar sind.

3. Werkzeugwechselvorrichtung nach Anspruch 1 oder 2, **dadurch gekennzeichnet,**
**dass** der Werkzeuggreifer (7) als Doppelgreifer ausgeführt ist und
**dass**, vorzugsweise, der Doppelgreifer (7) auf einem Schwenkkreis bewegbar ist und die beiden Werkzeugaufnahmen (8) des Doppelgreifers (7) in Umfangsrichtung des Schwenkkreises versetzt angeordnet sind.

4. Werkzeugwechselvorrichtung nach einem der Ansprüche 1 bis 3, **dadurch gekennzeichnet,**
**dass** die Werkzeugmagazine (10, 25) zumindest dort, wo der Übergabegreifer (26) angeordnet ist, zueinander benachbart angeordnet sind.

5. Werkzeugwechselvorrichtung nach einem der Ansprüche 1 bis 4, **dadurch gekennzeichnet,**
**dass** zumindest das erste Werkzeugmagazin (10) eine bestimmte Längserstreckung aufweist und
**dass** der Werkzeuggreifer (7) an oder nahe zu einem Ende des Werkzeugmagazins (10) und der Übergabegreifer (26) an oder nahe zu einem gegenüberliegenden Ende des Werkzeugmagazins (10) angeordnet ist.

6. Werkzeugwechselvorrichtung nach einem der Ansprüche 1 bis 5, **dadurch gekennzeichnet,**
**dass** der Übergabegreifer (26) an einem Portalträger (28) verfahrbar angebracht ist.

7. Werkzeugwechselvorrichtung nach einem der Ansprüche 1 bis 6, **dadurch gekennzeichnet,**
**dass** das erste Werkzeugmagazin (10) und/oder das zweite Werkzeugmagazin (25) als Kettenmagazin mit einem Karussell (13) und einer daran umlaufenden Kette (14) mit daran angeordneten Werkzeugaufnahmen (9) ausgeführt ist.

8. Bearbeitungszentrum zur maschinellen Bearbeitung eines Werkstückes mittels unterschiedlicher Werkzeuge (4, 5),
mit einem Bearbeitungsständer (2), der vorzugsweise als verfahrbarer Fahrständer ausgeführt ist, und
mit einer werkzeugtragenden, verfahrbaren Antriebsspindel (11), die am Bearbeitungsständer (2) angebracht ist,
**gekennzeichnet durch**
eine Werkzeugwechselvorrichtung nach einem der Ansprüche 1 bis 7.

9. Bearbeitungszentrum nach Anspruch 8, **dadurch gekennzeichnet,**
**dass** die Werkzeugwechselvorrichtung (1) am Bearbeitungsständer (2) angebracht und, sofern der Bearbeitungsständer (2) als Fahrständer ausgeführt ist, mit dem Fahrständer (2) mitfahrend ausgeführt ist.
